(19) Europäisches Patentamt
European Patent Office
Office européen des brevets

(11) **EP 0 517 140 B1**

(12) **EUROPÄISCHE PATENTSCHRIFT**

(45) Veröffentlichungstag und Bekanntmachung des Hinweises auf die Patenterteilung:
**20.03.1996   Patentblatt 1996/12**

(51) Int Cl.$^6$: **G01P 5/00**

(21) Anmeldenummer: **92109210.2**

(22) Anmeldetag: **01.06.1992**

(54) **Vorrichtung zur Messung kleiner Flüssigkeits- und Partikelströme**

Apparatus for measuring small fluid and particle flow

Appareil de mesure des petits écoulements d'un fluide ou de particules

(84) Benannte Vertragsstaaten:
**AT CH DE FR GB IT LI SE**

(30) Priorität: **07.06.1991  DE 4118809**
**07.06.1991  DE 4118827**
**06.03.1992  DE 4207031**

(43) Veröffentlichungstag der Anmeldung:
**09.12.1992   Patentblatt 1992/50**

(73) Patentinhaber: **Wagner, Louise**
**D-83471 Berchtesgaden (DE)**

(72) Erfinder: **Wagner, George F.**
**W-8240 Berchtesgaden (DE)**

(74) Vertreter:
**Haft, von Puttkamer, Berngruber, Czybulka**
**Patentanwälte**
**Franziskanerstrasse 38**
**D-81669 München (DE)**

(56) Entgegenhaltungen:
**US-A- 4 016 528**

- **PATENT ABSTRACTS OF JAPAN vol. 6, no. 209 (P-150)(1087) 21. Oktober 1982 & JP-A-57 114 862**
- **PATENT ABSTRACTS OF JAPAN vol. 4, no. 168 (P-37)(650) 20. November 1980 & JP-A-55 113 974**

**Beschreibung**

Die Erfindung bezieht sich auf eine Vorrichtung zur Messung kleiner Flüssigkeits- und Partikelströme in einem Meßrohr nach dem Hochfrequenz-Ultraschall-Doppler-Prinzip.

Derartige Ultraschall-Doppler-Strömungsmeßvorrichtungen sind bekannt (vgl. DE-GM 89 03 288; DDR-Zeitschrift "Messen, Steuern, Regeln", Berlin (1988), Band 5, Seiten 232 bis 234; britische Zeitschrift "Medical and Biological Engineering 1975, Seiten 59 bis 64; JP-A-57-114 862, welches die Merkmale des ersten Teiles von Anspruch 1 offenbart).

Gegenüber anderen Meßverfahren, bei denen Blenden, Turbinen und dgl. mechanische Einrichtungen in der Strömung eingesetzt werden, ist die Strömungsmessung nach dem Ultraschall-Doppler-Prinzip eingriffs frei, so daß sie sich insbesondere auch zur Strömungsmessung von abrasiven, d. h. sehr harten, kantigen Teilchen eignet, ferner für hochreaktive Stoffe, wie Klebstoffe.

Die Strömungsmessung nach dem Ultraschall-Doppler-Prinzip ist jedoch relativ ungenau, verglichen mit herkömmlichen Verfahren, beispielsweise mit mechanischen Vorrichtungen.

Aufgabe der Erfindung ist es daher, die Genauigkeit der Strömungsmessung nach dem Ultraschall-Doppler-Prinzip zu verbessern.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Der Doppler-Effekt in Flüssigkeiten und anderen Fluiden beruht darauf, daß die Teilchen in dem Fluid einen gebündelten Schallstrahl aufgrund ihrer relativen Bewegung zwischen Sende- und Empfangsschallwandler mit einer Frequenzverschiebung, der Doppler-Frequenz, reflektieren.

Wie sich herausgestellt hat, ist ein wesentlicher Grund für die geringe Meßgenauigkeit bei der Strömungsmessung nach dem Ultraschall-Doppler-Prinzip darin zu sehen, daß die Reflektion an den Teilchen durch Interferenz zu einer Impulsauslöschung führen kann.

Mit der erfindungsgemäßen Vorrichtung mit z. B. zwei Empfängern gibt der dritte Mischer aber auch dann ein Signal ab, wenn der erste oder der zweite Mischer aufgrund einer Interferenz kein Ausgangssignal liefert. Da eine Signalauslöschung durch Interferenz bei beiden Empfängern gleichzeitig sehr unwahrscheinlich ist, wird damit die Meßgenauigkeit wesentlich erhöht, so daß man mit der erfindungsgemäßen Vorrichtung eine Meßgenauigkeit erreicht, wie man sie bisher nur von mechanischen Vorrichtungen her kennt.

Bei der erfindungsgemäßen Vorrichtung sind die Schallwandler vorzugsweise als piezoelektrische Schwingerplättchen ausgebildet, die jeweils auf einer planen Außenfläche am Umfang des Meßrohres angeordnet sind.

Die ebenen Flächen an der Außenseite des Meßrohres, auf denen die piezoelektrischen Schwingerplättchen aufliegen, sind entsprechend dem Einstrahlwinkel der Leitfrequenz des Sendestrahlwandlers gegenüber der Rohrlängsachse geneigt. Wie sich herausgestellt hat, ist es vorteilhaft, den Einstrahlwinkel in Abhängigkeit vom Innendurchmesser des Meßrohres zu ändern. D. h., es ist vorteilhaft, folgende Bedingung einzustellen:

$$\text{Einstrahlwinkel (Grad)} = \frac{50}{1{,}09^{n-1}} \pm 20\% \ (\text{vorzugsweise } 10\%)$$

worin n bei einem prismatischen Meßrohr den Abstand der beiden sich gegenüberliegenden ebenen Flächen der Rohrinnenwand in Millimeter bedeutet, und bei einem runden Rohr den Innendurchmesser in Millimeter.

Diese Bedingung stützt sich auf Versuche, die folgenden optimalen Einstrahlwinkel in Abhängigkeit vom Abstand dieser beiden Flächen voneinander ergeben haben: ca. 50° bei 1 mm, ca. 40° bei 3 mm, ca. 30° bei 6 mm und ca. 25 bis 30° bei 8 mm.

Die erfindungsgemäße Vorrichtung ist zur Messung kleiner Partikelströme bzw. niedriger Strömungsgeschwindigkeiten bis hinab zu Bruchteilen von mm/s bzw., bezogen auf das Flüssigkeitsvolumen, bis hinab auf nl/s bestimmt.

Insbesondere kann die erfindungsgemäße Vorrichung Anwendung finden zur Mengenbestimmung von Klebstoffen, wie Kaltleim, Heißleim, Cyanoacrylate, anaerobe Klebstoffe, UrethanacrylatKleber, Urethanacrylat-Harz, Polyurethane, Epoxy-Harze und Methacrylat-Harz. Sie ist ferner zur Mengenbestimmung von Wachs und von Farben und Lacken geeignet, ferner zur Mengenbestimmung von Ölen und Fetten sowie von Additiven, z. B. Korrosionsinhibitoren, um nur einige Beispiele zu nennen.

Ein wesentliches Anwendungsgebiet der erfindungsgemäßen Vorrichtung bildet ferner die Volumenmessung von Lötpasten und Aufschlämmungen, insbesondere von Keramik- und Diamantteilchen.

So müssen bei der Herstellung von Silicium-Wafern optimale geometrische Abmessungen (Planschliff) eingehalten werden, damit die anschließenden Arbeitsgänge, z. B. zur Chip-Herstellung exakt durchgeführt werden können. Demgemäß werden Wafer einer Oberflächenbehandlung durch Läppen unterzogen. Dabei wird der Läppmaschine ein Läppmittel zugeführt, das aus einer wäßrigen Aufschlämmung harter Teilchen, meist feinen Diamant- oder Korundteilchen besteht. Da die herkömmlichen mechanischen Vorrichtungen zur Strömungsmessung durch den hohen Abrieb nicht einsetzbar sind, war es bisher nicht möglich, die Zufuhrmenge des Läppmittels exakt zu überwachen bzw. zu regeln.

Gleiches gilt für andere Oberflächenfeinbearbeitungsverfahren, wie das Honen, Schleifen oder Polieren.

Wie erwähnt, beruht der Doppler-Effekt darauf, daß Teilchen in dem Fluid im gebündelten Schallstrahl aufgrund ihrer Relativbewegung zwischen Sende- und Empfangsschallwandler eine Frequenzverschiebung nach der Reflektion des Schallstrahls erzeugen.

In einem gewöhnlichen Rohr mit geringem Innendurchmesser bewegen sich die Reflektorteilchen in dem Flüssigkeitsstrom jedoch mit unterschiedlicher Geschwindigkeit, je nach dem, ob sie in der Mitte oder an der Rohrwand entlangströmen. Ein wesentlicher Grund für die unterschiedlichen Strömungsgeschwindigkeiten der Streuteilchen ist die Reibung der Trägerflüssigkeit an der Rohrwand. Demgemäß wird das Doppler-Meßsignal-Spektrum aus vielen verschiedenen Differenzfrequenzen gebildet, so daß ein relativ breites, niedriges Meßsignal mit einem entsprechend niedrigen Nutz/Störsignal-Verhältnis entsteht.

Wenn es gelänge, den Reflektorteilchen eine gleichmäßige Geschwindigkeit über den Rohrquerschnitt zu verleihen, würde sich also ein scharfes Meßsignal, d. h. ein Linienspektrum ergeben und damit eine genaue und empfindliche Messung kleiner Flüssigkeitsströme in Rohren mit kleinem Durchmesser möglich sein.

Bei der Strömungsmessung nach dem Ultraschall-Doppler-Prinzip beeinträchtigt eine laminare Strömung die Schärfe des Doppler-Meßsignales, da die laminare Strömung das bekannte im Querschnitt parabelförmige Geschwindigkeitsprofil mit der höchsten Geschwindigkeit in der Rohrmitte und der Geschwindigkeit Null an der Rohrwand ausbildet. Demgemäß muß die Strömungsgeschwindigkeit im Meßrohr so eingestellt werden, daß eine turbulente Strömung entsteht, also eine Reynolds Zahl größer 2300, insbesondere größer 4000. Damit sich eine gleichmäßige turbulente Strömung im Rohr im Meßbereich einstellt, also im Bereich der Schallkeule des Ultraschallsensors, muß eine ausreichend lange Vorlaufstrecke vor dem Meßbereich mit dem gleichen Innendurchmesser wie der Meßbereich vorgesehen sein. Wie sich gezeigt hat, soll diese Vorlaufstrecke mindestens das Zehnfache des Durchmessers des Rohres betragen.

Wie erwähnt, ist der Innendurchmesser des Meßrohres der erfindungsgemäßen Vorrichtung zumindest im Bereich, also im Bereich der Schallkeule des Ultraschallsenders, relativ klein, vorzugsweise 3 mm oder weniger.

Je kleiner nämlich der Innendurchmesser des Rohres ist, um so größer ist die Meßkanalkonstante, d. h. die Auflösung. So ist bei einer Sendefrequenz von 10 MHz, z. B. die Konstante des Meßkopfes 5 Hz/mm/s. Diese Konstante ist unabhängig vom Durchmesser

$$\frac{5\,Hz}{mm/s} = \frac{Dopplerfrequenzlinie\ (theoret.)}{Geschwindigkeit\ im\ Me\beta rohr}$$

Bei einem Innendurchmesser des Meßrohres von 3 mm ist die Dopplerfrequenz 5 Hz und bei einem Innendurchmesser von 1 mm 50 Hz. Die Doppler-Frequenz $f_D$ ergibt sich nämlich aus:

$$f_D = 2\,v\,f_0 \cdot \cos\alpha \cdot /c_M$$

worin bedeuten:

$f_0 =$ Sendefrequenz

$\alpha =$ Einstrahlwinkel

$v =$ Strömungsgeschwindigkeit der Streuteilchen im Bereich der Ultraschallkeule

$c_M =$ Schallgeschwindigkeit im Meßkopf

Die Strömungsgeschwindigkeit v ist jedoch umgekehrt proportional zum Quadrat des Durchmessers des Rohres.

Scharfe Doppler-Meßsignale werden erhalten, wenn die Innenwand des Meßrohres aus einem Kunststoff besteht, der einen E-Modul von mehr als 2500 MPa aufweist und eine Oberflächenenergie von weniger als 200 mN/m besitzt. Ein solches Material kann beispielsweise Polyoxymethylen, Polyvinylchlorid, Polymethylmethacrylat, Areyl-methylmethacrylat, Polysulfon, Polyacetal-Harz, Polyethylentherephthalat, Polycarbonat, Epoxy-Harz, Polyetherimid, Polyetheretherketon, Polyamidimid, Polyimid oder Polybutylentherephthalat sein. Als geeignetes Material für das Meßrohr zur Erzeugung scharfer Doppler-Meßsignale hat sich vor allem Polyoxymethylen (POM) als geeignet erwiesen, das einen E-Modul von über 2500 MPa und eine Oberflächenenergie von 33 mN/m besitzt. Zugleich stellt POM einen relativ abriebfesten Kunststoff dar.

Das Meßrohr kann dabei einen konzentrischen Schichtaufbau aufweisen, wobei die Außenschicht z. B. aus Stahl oder einem anderen Material besteht, das einen Elastizitätsmodul von mehr als 2000 MPa besitzt, während die Innenschicht aus einem Material mit einer Oberflächenenergie von weniger als 200 mN/m besteht. So kann die Innenauskleidung beispielsweise ein Fluorkohlenstoff- oder Fluorkohlenwasserstoff-Polymeres, wie PVFD oder PTFE, sein, während die Außenschicht beispielsweise aus Metall, wie Stahl, oder Keramik, wie Aluminiumoxid, oder Glaskohlenstoff besteht. Eine Innenauskleidung aus Fluorkohlenstoff- oder Fluorkohlenwasserstoff-Polymeren oder Polyethylen ist insbesondere für Meßrohre geeignet, die zur Messung von Cyanoacrylatklebstoffen verwendet werden.

Eine niedrige Oberflächenenergie ist dabei um so wichtiger, je kleiner der Innenquerschnitt des Meßrohres ist. Die Wirkung der Oberflächenenergie erstreckt sich im wesentlichen nur auf wenige Zehntel Millimeter. Das bedeutet, daß bei einem Querschnitt des Meßrohres von mehr als 10 mm die Bedeutung der Oberflächenenergie abnimmt. Ähnliches gilt für die Wandrauhigkeit.

Neben einer niedrigen Oberflächenenergie an der Innenwand des Meßrohres ist es entscheidend, daß das Meßrohr aus einem Material besteht, das einen Elastizitätsmodul (Zug) von mindestens 2500 MPa (2500 N/mm$^2$) aufweist. So besitzt Polymethylmethacrylat (PMMA) z. B. einen E-Modul von etwa 3300 MPa und Eisen von ca. 22000 MPa.

Sofern sie eine Schichtdicke von 0,5 mm nicht überschreitet, kann die Innenauskleidung jedoch auch aus einem Material mit einem E-Modul von weniger als 2500 MPa bestehen, z. B. aus einem Kunststoff, wie Polyethylen, Polypropylen oder Parylenen. Auch kann ein entsprechend dünner Schlauch aus Polytetrafluorethylen oder einem anderen Fluorwerkstoff (Fluorkohlenstoff- oder Fluorkohlenwasserstoff-Polymeres) in das Rohr eingezogen sein. Dies betrifft insbesondere das Keramikrohr aus z. B. Al$_2$O$_3$, welches mit einer Normalrauhigkeit zwischen 5-10 µm geliefert wird. Durch das Bedampfen in Vakuum mit dem Kunststoff Parylene bzw. mit der Beschichtung mit einem Fluorwerkstoff (PTFE bzw. PVDF) bzw. das Einziehen eines Stückes Kunststoffschlauch aus vorgenannten Werkstoffen kann bezüglich der Beständigkeit ein gleich gutes Ergebnis erreicht werden, wie bei widerstandsfähigem Edelstahl.

Zur Strömungsmessung abrasiver Teilchen sind Kunststoffrohre und Rohre mit einer Innenauskleidung aus Kunststoff ungeeignet. Andererseits hat ein Metallrohr, z. B. ein Eisenrohr, gegenüber einem Kunststoffrohr bei gleichem Durchmesser ein wesentlich ungünstigeres Strömungsgeschwindigkeitsprofil im Hinblick auf die Gewinnung eines Spektrums mit scharfen Peaks. Wie Versuche gezeigt haben, wird dieses Spektrum auch dadurch nicht wesentlich verbessert, wenn das Eisen-Meßrohr mit einem erheblichen Aufwand innen glattpoliert wird. Noch schlechtere Ergebnisse wurden mit handelsüblichen, warmverformten Stahlrohren erhalten.

Überraschenderweise hat sich nun gezeigt, daß bei Verwendung eines Meßrohres aus Stahl, der nicht warm-, sondern kaltverformt worden ist, ein Spektrum mit scharfen Peaks erhalten wird, und zwar selbst bei einem Innendurchmesser des Rohres von weniger als 3 mm oder sogar weniger als 2 mm.

Die Ursache dafür liegt möglicherweise darin, daß kaltverformter Stahl von vorneherein eine geringere Rauhtiefe aufweist als warmverformter Stahl und daß das Kristallisationsgefüge im Stahl durch Kaltverformung, also z. B. durch Kaltziehen, stärker zerstört wird, als in einem warmverformten Stahlrohr. Kristalle im Stahl führen aber zu einer Zerstrahlung des gebündelten hochfrequenten Ultraschallstrahls und damit zu einem entsprechend großen "Rauschen" oder Störsignal, so daß sich schlecht verwertbare Peaks ergeben. Besonders gute Ergebnisse konnten mit kalt gezogenen Rohren aus Chrom-Nickel-Stahl festgestellt werden, insbesondere die Stahlsorten nach DIN-Werkstoff Nr. 1.4301, 1.4305 und 1.4571.

Einen hervorragenden Werkstoff für das Meßrohr bildet ferner Glaskohlenstoff (glassy carbon), wie er z. B. in Z. Werkstofftech. 15, Seiten 331-338 (1984) beschrieben wird.

Das Meßrohr kann sich durch einen ringförmigen Träger erstrecken, an dem die planen Außenflächen vorgesehen sind, auf denen die als piezoelektrische Schwingerplättchen ausgebildeten Schallwandler angeordnet sind. Der Träger besteht dabei ebenfalls vorzugsweise aus einem Material mit einem E-Modul von mindestens 2500 MPa, beispielsweise PMMA, insbesondere gegossenes PMMA. PMMA hat den zusätzlichen Vorteil, daß es durchsichtig ist, so daß geprüft werden kann, ob der ringförmige Träger z. B. mit einem Kleber fest und schallgekoppelt mit dem Meßrohr verbunden ist.

Das Meßrohr kann einen kreisförmigen Querschnitt aufweisen. Ein kreisförmiger Querschnitt führt jedoch zu einer gewissen Streuung des gebündelten Ultraschallstrahls und damit zu einem breiten Doppler-Signal-Peak, also zu einem schlechten Nutz/Störsignal-Verhältnis. Dies liegt darin begründet, daß der Weg des Schallstrahls von den planen Flächen, auf denen der oder die plättchenförmigen Sendeschallwandler liegen, durch die Rohrwand hindurch aufgrund der Krümmung der Rohrwand unterschiedlich lang ist. Gleiches gilt für den Weg des Schallstrahls durch die Rohrwand zu der oder den ebenen Flächen, auf denen die plättchenförmigen Empfangsschallwandler liegen.

Ein Meßrohr mit prismatischem Querschnitt, also z. B. rechteckigem oder sechseckigem Querschnitt wird daher einem Meßrohr mit kreisförmigem Querschnitt vorgezogen. Allerdings ist ein Rohr mit prismatischem Querschnitt im allgemeinen kostspieliger.

Bei einem Rohr mit rechteckigem, insbesondere quadratischem Querschnitt, können der Sendeschallwandler an einer Fläche und die beiden Empfangsschallwandler um 90° zu dem Sendeschallwandler versetzt an der einen bzw. anderen Fläche des Prismas neben dem Sendeschallwandler angeordnet sein.

Bei einem sechseckigen Querschnitt des Meßrohres können der Sendeschallwandler an einer Fläche des Prismas und die beiden Empfangsschallwandler an den beiden gegenüber dem Sendeschallwandler um 120° versetzten Flächen angeordnet sein.

Ein sechs-eckiger oder gar acht-eckiger Querschnitt des Meßrohres wird dabei einem rechteckigen Querschnitt im allgemeinen vorgezogen, weil die Strömungsgeschwindigkeit in den rechtwinkligen Ecken stärker herabgesetzt wird, als in Ecken mit einem Winkel von 120° und mehr.

Wenn hier von "Sende- und Empfangsschallwandler" die Rede ist, sei bemerkt, daß die Sende- und Empfangsschallwandler gleich ausgebildet sind und lediglich als Sende- oder Empfangsschallwandler geschaltet sind. Ein Sendeschallwandler kann also zu einem Empfangsschallwandler umschaltbar sein und umgekehrt.

Um die Schallwandler gemeinsam entweder in oder gegen die Strömungsrichtung auszurichten, kann das Rohr an der Außenseite mit Flächen mit keilförmigen Nuten versehen sein, wobei die piezoelektrischen Schwingerplättchen an den entsprechenden Flanken dieser Nuten angeordnet sind. Z. B. bei einem Rohr mit prismatischem Querschnitt ist es jedoch auch möglich, an den entsprechenden planen Außenflächen des Rohres keilförmige Teile zu befestigen, um darauf die piezoelektrischen Schwingerplättchen anzuordnen. Diese keilförmigen Teile sollten ebenfalls aus einem Material bestehen, das einen E-Modul von mindestens 2500 MPa aufweist, also beispielsweise aus PMMA, insbesondere gegossenem PMMA.

Nachstehend ist die Erfindung anhand der Zeichnung näher erläutert. Darin zeigen jeweils schematisch:

Fig. 1    ein Meßrohr mit einem Blockschaltbild der Ultraschall-Doppler-Meßvorrichtung nach einer Ausführungsform der Erfindung;

Fig. 2    eine Draufsicht auf die Meßstelle am Meßrohr; und

Fig. 3    das Mischen der Signale in dem dritten Mischer.

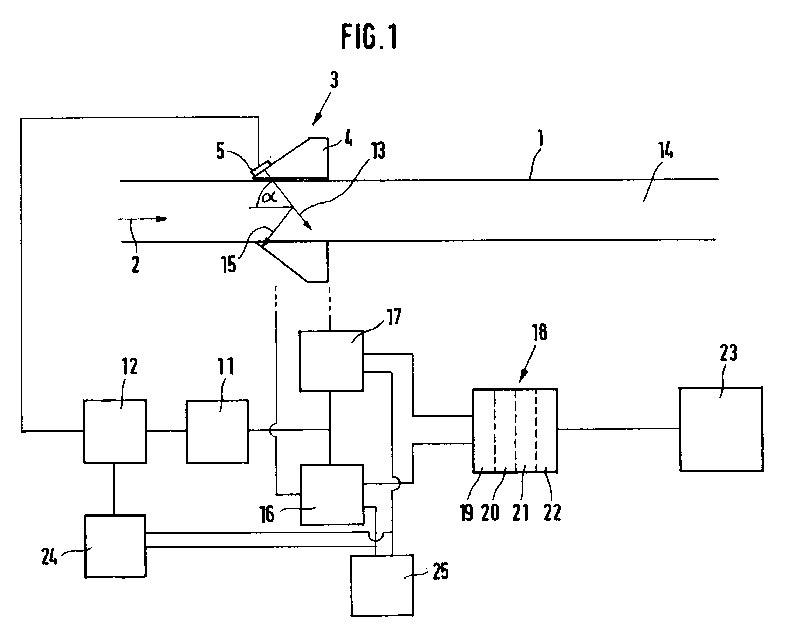

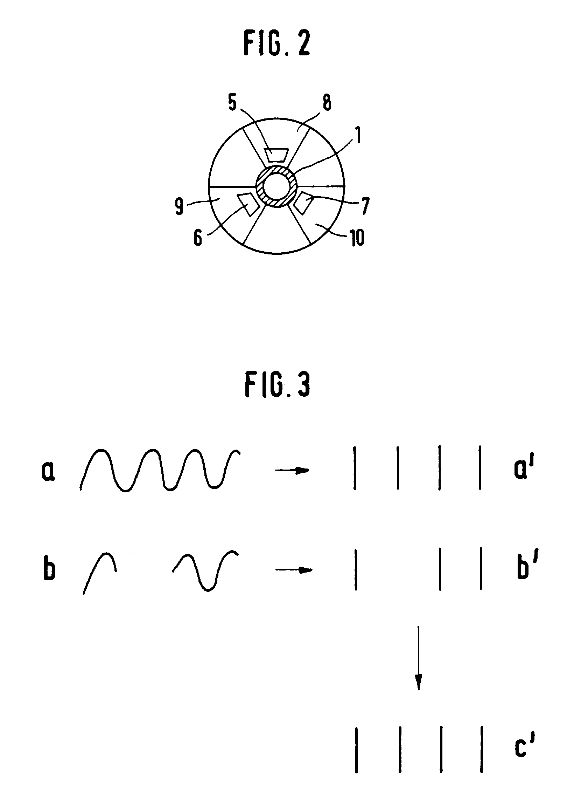

Gemäß Fig. 1 strömt durch ein Meßrohr 1 ein Flüssigkeitsstrom in Richtung des Pfeiles 2. An dem Meßrohr 1 ist eine Meßstelle 3 vorgesehen, die aus einem um das Meßrohr 1 koaxial angeordneten ringförmigen Träger 4 besteht, auf dem drei als piezoelektrische Schwingerplättchen ausgebildete Schallwandler 5, 6 und 7 angeordnet sind, wie aus Fig. 2 ersichtlich.

Der Träger 4 ist dazu konisch ausgebildet, und die Schallwandler 5, 6 und 7 sind auf in die konische Oberfläche plan eingeschliffenen Außenflächen 8, 9, 10 angeordnet, die um 120° versetzt sind. Der als Sendeschallwandler geschaltete Schallwandler 5 ist auf der Außenfläche 8 angeordnet und die als Empfangsschallwandler geschalteten Schallwandler 6 und 7 auf den Außenflächen 9 und 10. Die drei Schallwandler 5, 6 und 7 liegen in einer Querschnittsebene des Meßrohres 1.

Ein Hochfrequenz-Oszillator 11 mit einer Sendefrequenz von z. B. 1 bis 20 MHz liefert die Ultraschall-Sendefrequenz, die von einem Verstärker 12 verstärkt dem Sendeschallwandler 5 zugeführt wird. Von dem Sendeschallwandler 5 wird der Ultraschall 13 (Leitfrequenz) mit einem Einstrahlwinkel Alpha gegenüber der Rohrlängsachse 14 schräg in Strömungsrichtung 2 in die Flüssigkeit eingestrahlt. Bei einem Rohrinnendurchmesser d von 6 mm beträgt der Einstrahlwinkel Alpha vorzugsweise ca. 30°.

Wenn sich in der Flüssigkeit in der von dem Ultraschall 13 erzeugten Schallkeule ein Teilchen befindet, wird der Ultraschall 13 an dem Teilchen reflektiert und die reflektierte Strahlung 15 (Empfangsfrequenz), die aufgrund des Doppler-Effekts frequenzverschoben ist, wird von den beiden Empfangsschallwandlern 6, 7 in ein elektrisches Signal umgewandelt.

Das von dem Empfangsschallwandler 6 erzeugte elektrische Signal wird einem ersten Mischer 16 zugeführt, in dem die Differenzbildung von Leitfrequenz und Empfangsfrequenz erfolgt, die das erste Differenz- oder Dopplersignal gibt.

Die von dem erwähnten Teilchen reflektierte frequenzverschobene Strahlung 15 wird gleichzeitig von dem zweiten Empfangsschallwandler 7 erfaßt, der ein entsprechendes elektrisches Signal erzeugt, das einem zweiten Mischer 17 zugeführt wird, in dem ebenfalls die Differenzbildung von Leitfrequenz und Empfangsfrequenz erfolgt, die dann das zweite Dopplersignal ergibt.

Das im ersten Mischer 16 erzeugte erste Dopplersignal und das im zweiten Mischer 17 erzeugte zweite Dopplersignal werden einem dritten Mischer 18 zugeführt, in dem die Dopplersignale des ersten Mischers 16 und des zweiten Mischers 17 gemischt werden, wie nachstehend anhand der Fig. 3 näher erläutert wird.

In Fig. 3 stellt a den Impulszug dar, der von dem ersten Mischer 16 erzeugt wird und b den vom zweiten Mischer 17 erzeugten Impulszug. Beide Impulszüge a und b werden in die in der Zeichnung mit a' und b' schematisch wiedergegebene digitalisierte Form umgewandelt und dem dritten Mischer 18 zugeführt. Von dem Impulszug b ist dabei durch Interferenzeffekte, beispielsweise durch die reflektierte Strahlung anderer Partikel, eine Amplitude ausgelöscht.

Der dritte Mischer 18 weist einen Impulsspeicher 19 auf, dem die digitalisierten Impulse a' und b' zugeführt werden. In einem Mischglied 20 werden dann die Impulse a' und b' gemischt. Falls im Impulsspeicher 19 festgestellt worden ist, daß in einem, wie im Fall des Impulszuges b', oder in beiden Impulszügen gleichzeitig eine Amplitude ausgefallen ist, wird das gemischte Signal in einem Impulsauffüllglied 21 entsprechend aufgefüllt, so daß der in Fig. 3 mit c' bezeichnete Impulszug gebildet wird.

Ein weiteres Glied 22 stellt fest, wenn in beiden Impulszügen a' und b' mindestens zwei Amplituden gleichzeitig hintereinander fehlen. Das bedeutet, daß sich die Strömung nicht mehr bewegt, also beendet ist.

Dies läßt sich zur genauen Bestimmung sehr kleiner Flüssigkeitsmengen nutzen, wie folgendes Beispiel zeigt: Die Frequenz der Doppler-Signale gemäß den Wellenzügen a und b sei beispielsweise so, daß der Abstand zweier Amplituden voneinander 1 ms beträgt. D. h., es kann anhand der Doppler-Frequenz festgestellt werden, wie groß die Strömungsgeschwindigkeit ist und bei einem Ausfall von zwei Amplituden auf 2 ms genau angegeben werden, daß die Strömung nicht mehr fließt. Strömungsimpulse mit einer Dauer von z. B. weniger als 100 ms sind also exakt erfaßbar. Dadurch ist es möglich, mit der erfindungsgemäßen Vorrichtung sehr geringe Flüssigkeitsmengen exakt zu bestimmen, beispielsweise, wenn eine elektromagnetisch betriebene Dosierpumpe verwendet wird, mit der das Medium tröpfchenweise abgegeben wird. Das vom Mischer 18 gebildete Signal wird dann einer Anzeigevorrichtung 23, wie einem Display, zugeführt.

Das vom ersten und/oder zweiten Mischer 16, 17 gelieferte Signal wird zugleich einem Regler 24 zugeführt, der die Leistung des Verstärkers 12 umgekehrt proportional zu der Amplitude des aus dem Mischer 18 austretenden Impulszuges c' verstärkt. Ein solcher Regler 24 ist insbesondere bei größeren Durchmessern des Meßrohres 1 vorteilhaft.

In der zu messenden Flüssigkeit können beispielsweise Gasblasen zu erheblichen Störungen führen, wenn beispielsweise ein Klebstoff oder eine Lötpaste als Raupe auf ein Werkstück aufgetragen werden sollen und diese Raupe durch eine derartige Gasblase unterbrochen wird.

Um dies zu verhindern, können der erste Mischer 16 und der zweite Mischer 17 mit einem Analysator 25 zur Feststellung der Frequenz und der Amplitude der Dopplersignale verbunden sein. Ein von einer solchen Gasblase herrührendes Dopplersignal besitzt eine besonders hohe Amplitude. Bei einer hohen Amplitude betätigt der Analysator 25 daher z. B. einen Aktuator, der die Flüssigkeit, die sich zwischen der Meßstelle 3 und dem Austrittsende im Rohr 1 befindet, z. B. einem Abfallgefäß zuführt.

## Patentansprüche

1. Vorrichtung zur Messung kleiner Flüssigkeits- und Partikelströme in einem Meßrohr (1) nach dem Hochfrequenz-Ultraschall-Doppler-Prinzip, bei der wenigstens drei gemeinsam entweder in oder gegen die Strömungsrichtung (2) gerichtete, um den Umfang des Meßrohres (1) verteilte Schallwandler (5, 6, 7), die zu einem Sender und zwei Empfängern oder zu zwei Sendern und einem Empfänger schaltbar sind, zwei Mischer (16, 17), die zur Erzeugung eines Differenzsignales aus Leitfrequenz und Empfangsfrequenz zwischen dem Sender und den beiden Empfängern oder zwischen den beiden Sendern und dem Empfänger geschaltet sind und ein dritter Mischer (18) vorgesehen sind, wobei der dritte Mischer (18) ein Ausgangssignal aus dem Differenzsignal des ersten Mischers (16) und dem Differenzsignal des zweiten Mischers (17) erzeugt, dadurch gekennzeichnet, daß der dritte Mischer (18) so ausgebildet ist, daß in ihm Impulsreihen (a', b') aus dem ersten Mischer (16) und dem zweiten Mischer (17) miteinander verglichen werden, wobei bis zu einer vorgegebenen Höchstzahl jene Impulse, die an mindestens einem der beiden Mischer (16, 17) ausgefallen sind, in der ausgangsseitigen Impulsfolge (c') aufgefüllt werden.

2. Vorrichtung nach Anspruch 1, dadurch gekennzeichnet, daß das Meßrohr (1) plane Außenflächen (8, 9, 10) aufweist, auf denen die als piezoelektrische Schwingerplättchen ausgebildeten Schallwandler (5, 6, 7) angeordnet sind.

3. Vorrichtung nach Anspruch 2, dadurch gekennzeichnet, daß sich das Meßrohr (1) durch einen ringförmigen Träger (4) erstreckt, an dem die planen Außenflächen (8, 9, 10) vorgesehen sind.

4. Vorrichtung nach Anspruch 1 oder 2, dadurch gekennzeichnet, daß das Meßrohr (1) einen prismatischen Querschnitt aufweist und die Schallwandler (5, 6, 7) an jeweils einer anderen Fläche des Prismas angeordnet sind.

5. Vorrichtung nach einem der vorstehenden Ansprüche, dadurch gekennzeichnet, daß die Leitfrequenz vom Sendeschallwandler (5) mit einem Einstrahlwinkel (Alpha) zur Rohrlängsachse (14) nach folgender Bedingung in die Flüssigkeit eingestrahlt wird:

$$\text{Einstrahlwinkel (Alpha)} = \frac{50}{1{,}09^{n-1}} \pm 20\%$$

worin n der Innendurchmesser des Meßrohres (1) in Millimeter ist.

6. Vorrichtung nach einem der vorstehenden Ansprüche, dadurch gekennzeichnet, daß der Innendurchmesser des Meßrohres (1) 0,2 mm bis 15 mm beträgt.

7. Vorrichtung nach einem der vorstehenden Ansprüche, dadurch gekennzeichnet, daß das Meßrohr (1) aus kaltgeformtem Stahl besteht.

8. Vorrichtung nach einem der vorstehenden Ansprüche, dadurch gekennzeichnet, daß das Meßrohr (1) zumindest an der Innenwand aus einem Material besteht, das eine Oberflächenenergie von weniger als 200 mN/m besitzt.

9. Vorrichtung nach Anspruch 1, dadurch gekennzeichnet, daß der dritte Mischer (18) derart ausgebildet ist, daß bei Überschreiten der vorgegebenen Höchstzahl ausgefallener Impulse des ersten Mischers (16) und des zweiten Mischers (17) das Strömungsende angezeigt wird.

10. Vorrichtung nach einem der vorstehenden Ansprüche, dadurch gekennzeichnet, daß zur Feststellung der Amplitude der Impulse ein Analysator (25) vorgesehen ist.

11. Vorrichtung nach einem der vorstehenden Ansprüche, dadurch gekennzeichnet, daß ein Regler (24) zur Verstärkung der Leistung des oder der Sendeschallwandler (5) in Abhängigkeit von der Amplitude der Impulse des ersten Mischers (16) und/oder des zweiten Mischers (17) vorgesehen ist.

## Claims

1. An apparatus for measuring small liquid and particle currents in a meter tube (1) by the high-frequency ultrasound Doppler principle, wherein at least three sound transducers (5, 6, 7) distributed around the periphery of the meter tube (1) and directed jointly either in or against the direction of flow (2) and adapted to be connected to one transmitter and two receivers or to two transmitters and one receiver, two mixers (16, 17) connected between the transmitter and two receivers or between the two transmitters and receiver for producing a difference signal from leading frequency and received frequency, and a third mixer (18) are provided, the third mixer producing an output signal from the difference signal of the first mixer (16) and the difference signal of the second mixer (17), characterized in that the third mixer (18) is designed so that pulse strings (a', b') from the first mixer (16) and the second mixer (17) are compared with each other therein, whereby those pulses which were missing in at least one of the two mixers (16, 17) are filled up in the pulse sequence (c') on the output side up to a predetermined maximum.

2. The apparatus of claim 1, characterized in that the meter tube (1) has plane outside surfaces (8, 9, 10) on which the sound transducers (5, 6, 7) formed as piezoelectric resonator plates are disposed.

3. The apparatus of claim 2, characterized in that the meter tube (1) extends through a ring-shaped carrier (4) on which the plane outside surfaces (8, 9, 10) are provided.

4. The apparatus of claim 1 or 2, characterized in that the meter tube (1) has a prismatic cross section, and the sound transducers (5, 6, 7) are each disposed on a different surface of the prism.

5. The apparatus of any of the above claims, characterized in that the leading frequency is irradiated into the liquid from the transmitting sound transducer (5) at an angle of arrival (alpha) relative to the longitudinal tube axis (14) according to the following condition:

$$\text{Angle of arrival (alpha)} = \frac{50}{1.09^{n-1}} \pm 20\%$$

wherein n is the inside diameter of the meter tube (1) in millimeters.

6. The apparatus of any of the above claims, characterized in that the inside diameter of the meter tube (1) is 0.2 mm to 15 mm.

7. The apparatus of any of the above claims, characterized in that the meter tube (1) is made of cold-formed steel.

8. The apparatus of any of the above claims, characterized in that the meter tube (1) is made at least on the inside wall of a material which has a surface energy of less than 200 mN/m.

9. The apparatus of claim 1, characterized in that the third mixer (18) is designed in such a way that the end of flow is indicated when the predetermined maximum of missing pulses of the first mixer (16) and second mixer (17) is exceeded.

10. The apparatus of any of the above claims, characterized in that an analyzer (25) is provided for ascertaining the amplitude of the pulses.

11. The apparatus of any of the above claims, characterized in that a controller (24) is provided for amplifying the power of the transmitting sound transducer or transducers (5) in accordance with the amplitude of the pulses of the first mixer (16) and/or second mixer (17).

**Revendications**

1. Dispositif de mesure de petits écoulements de fluide et de particules dans un tube gradué (1) selon le principe Doppler à ultrasons à haute fréquence, dans lequel il est prévu au moins trois transducteurs acoustiques (5, 6, 7) répartis sur la circonférence du tube gradué (1), dirigés ensemble soit dans le sens d'écoulement (2) soit dans le sens contraire, qui peuvent être commutés à un rémetteur et deux récepteurs ou à deux émetteurs et un récepteur, deux mélangeurs (16, 17) qui sont commutés entre l'émetteur et les deux récepteurs ou entre les deux émetteurs et le récepteur pour engendrer un signal-différence de la fréquence conductrice et de la fréquence réceptrice, et un troisième mélangeur (18) qui produit un signal de sortie à partir du signal-différence du premier mélangeur (16) et à partir du signal-différence du second mélangeur (17), caractérisé en ce que le troisième mélangeur (18) est réalisé de telle manière que des séries d'impulsions (a', b') provenant du premier mélangeur (16) et du second mélangeur (17) y sont comparées l'une à l'autre, et jusqu'à un nombre maximum prédéterminé, les impulsions qui ont fait défaut dans au moins un des deux mélangeurs (16, 17) sont complétées dans la série d'impulsions (c') du côté de la sortie.

2. Dispositif selon la revendication 1, caractérisé en ce que le tube gradué (1) présente des surfaces extérieures planes (8, 9, 10) sur lesquelles sont agencés les transducteurs acoustiques 85, 6, 7) réalisés en tant que plaquettes de transducteur piézoélectriques.

3. Dispositif selon la revendication 2, caractérisé en ce que le tube gradué (1) s'étend à travers un support (4) annulaire sur lequel sont prévues les faces extérieures (8, 9, 10) planes.

4. Dispositif selon l'une ou l'autre des revendications 1 et 2, caractérisé en ce que le tube gradué (1) présente une section en forme de prisme et en ce que chacun des transducteurs acoustiques (5, 6, 7) est agencé sur une autre surface du prisme.

5. Dispositif selon l'une quelconque des revendications précédentes, caractérisé en ce que le transducteur acoustique d'émission (5) fait incider la fréquence conductrice dans le fluide sous un angle d'incidence (alpha) par rapport à l'axe longitudinal (14) du tube, selon la condition suivante:

$$\text{Angle d'incidence (alpha)} = \frac{50}{1,09^{n-1}} \pm 20\%,$$

n étant le diamètre interne du tube gradué (1), en millimètres.

6. Dispositif selon l'une quelconque des revendications précédentes, caractérisé en ce que le diamètre intérieur du tube gradué (1) est de 0,2 mm à 15 mm.

7. Dispositif selon l'une quelconque des revendications précédentes, caractérisé en ce que le tube gradué (1) est en acier façonné à froid.

8. Dispositif selon l'une quelconque des revendications précédentes, caractérisé en ce que le tube gradué (1) est constitué, tout au moins sur la paroi intérieure, par un matériau qui possède une énergie de surface inférieure à 200 mN/m.

9. Dispositif selon la revendication 1, caractérisé en ce que le troisième mélangeur (18) est réalisé tel que la fin de l'écoulement est indiquée lorsque le nombre maximum prédéterminé d'impulsions défaillantes du premier mélangeur (16) et du second mélangeur (17) est dépassé.

10. Dispositif selon l'une quelconque des revendications précédentes, caractérisé en ce qu'il est prévu un analyseur (25) pour déterminer l'amplitude des impulsions.

11. Dispositif selon l'une quelconque des revendications précédentes, caractérisé en ce qu'un régulateur (24) est prévu pour renforcer la puissance du ou des transducteurs acoustiques d'émission (5) en fonction de l'amplitude des impulsions du premier mélangeur (16) et/ou du second mélangeur (17).

FIG.1

# FIG. 2

# FIG. 3